# EUROPÄISCHE PATENTSCHRIFT

(11) **EP 0 883 873 B1**
(45) Veröffentlichungstag und Bekanntmachung des Hinweises auf die Patenterteilung: **22.12.1999**
(21) Anmeldenummer: 97905122.4
(22) Anmeldetag: 28.02.1997
(51) Int. Cl.: G08G 5/06

(54) **FLUGHAFEN-LEITSYSTEM, INSBESONDERE FLUGHAFEN-BODENVERKEHRSLEITSYSTEM**
AIRPORT GUIDANCE SYSTEM, IN PARTICULAR AIRPORT SURFACE MOVEMENT GUIDANCE AND CONTROL SYSTEM
SYSTEME DE GUIDAGE D'AEROPORT, EN PARTICULIER SYSTEME DE GUIDAGE ET DE CONTROLE DE LA CIRCULATION DE SURFACE POUR AEROPORT

(30) Priorität: 29.02.1996 DE 19607734; 29.02.1996 DE 19607720; 29.02.1996 DE 19607727
(43) Veröffentlichungstag der Anmeldung: 16.12.1998
(73) Patentinhaber: SIEMENS AKTIENGESELLSCHAFT, 80333 München (DE); Oslo Lufthavn A/S, 2060 Gardermoen (NO)
(72) Erfinder: CASTOR, Robert, D-85716 Unterschlei heim (DE); BELGER, Lothar, B-3078 Everberg (BE); JELU, André, B-3300 Tienen (BE); SKAAR, Per, Ingar, N-1084 Oslo (NO); HENRIKSEN, Einar, N-3217 Sandefjord (NO); BERG-NIELSEN, Fredrik, N-1320 Stabekk (NO)
(74) Vertreter: Epping, Wilhelm, Dr.-Ing.
(86) Internationale Anmeldenummer: EP9700984
(87) Internationale Veröffentlichungsnummer: WO9732291

(56) Entgegenhaltungen:
- DE-A- 4 406 821
- ELECTRICAL COMMUNICATION, 1.Januar 1993, ROMFORD,GB, Seiten 51-59, XP000360408 MONZEL F G ET AL: "SURFACE MOVEMENT GUIDANCE AND CONTROL SYSTEM"

## Beschreibung

Die Erfindung betrifft ein Flughafen-Bodenverkehrs-Leitsystem (Surface Movement Guidance and Control System, SMGCS).

Flughafen-Bodenverkehrs-Leitsysteme sind bekannt so z.B. aus der Druckschrift BRITE II der N.V. ADB S.A, Zaventem, Brüssel AP.01.810e, Sonderdruck zur Ausstellung Inter Airport 1995. Im Artikel in "Electrical Communication", 1 Januar 1993, Romford, GB, Seiten 51-59, XP000360408, von Monzel FG et al : "Surface movement guidance and control system" wird auf Seite 53 in der rechten Spalte, Datenkommunikation statt Sprechverbindung und auch Anzeige der Verkehrslage beim Lotsen vorgeschlagen. Eine durchgehend datengesteuerte Kontrolle des Flughafen - Bodenverkehrs wird anscheinend nicht vorgeschlagen. Es ist Aufgabe der Erfindung, das hier beschriebene, mit am Boden angeordneten Sensoren arbeitende, System derart auszugestalten, daß mit ihm eine Optimierung des Flughafenverkehrs mit einer Erhöhung der Start- und Landekapazität eines Flughafens unter allen Wetterbedingungen bei größtmöglicher Sicherheit gewährleistet ist. Dabei soll vorteilhaft auch ein flexibler Personaleinsatz im Tower möglich sein.

Die Aufgabe wird durch die Merkmale des Anspruchs 1 gelöst. Durch das erfindungsgemäße System, das in besonders vorteilhafter Weise alle Bewegungen, die für die Führung des Bodenverkehres notwendig sind, erfaßt, ergibt sich die Möglichkeit der Schaffung eines integrierten Kontroll- und Leitsystems von Flughäfen, mit dem eine Verkehrsoptimierung unter größtmöglicher Sicherheit gegen Kollisionen am Boden und im An- und Abflugbereich durchgeführt werden kann.

Während des Fluges sind die Flugzeuge gegen Kollisionen durch bodengestützte Navigationshilfen geschützt. Auch in ihrem endgültigen Anflug helfen ihnen nichtoptische und optische Anflughilfen den vorgegebenen Gleitpfad einzuhalten. Nach dem Touchdown bewegt sich das Flugzeug auf dem riskantesten Teil seines Weges. Die meisten Unfälle geschehen erwiesenermaßen am Boden. Hier hilft das erfindungsgemäße Surface Movement Guidance and Control Systems (SMGCS) entscheidend weiter, mit dem ununterbrochen überwacht und geführt wird. Ein derartiges System wird auch als Advanced-(A)-SMGCS bezeichnet, bisher ein nicht erfüllter Wunsch. Erfindungsgemäß ist es erstmalig realisierbar.

In Ausgestaltung der Erfindung ist vorgesehen, daß in die Erfassung und operationelle Leitung Fahrzeugbewegungen auf dem Flughafengelände einbezogen sind, z.B. mit Hilfe von Transponderabfragen oder Squittern von Transpondern oder über ID-Tags und drahtlose Kommunikationsmittel, die auch zur Übertragung von Anweisungen genutzt werden können. So wird die Kollisionssicherheit in Bezug auf den Bodenverkehr, der bisher besonders im Apron-Bereich weitgehend unkontrolliert abläuft, entscheidend erhöht. Es ist weiterhin vorgesehen, daß in die Erfassung und operationelle Leitung die Flugbewegungen im Anflug- und Abflugbereich einbezogen sind. So ergibt sich eine Optimierung der Bodenbewegungsplanung und gleichzeitig die Erhöhung der Sicherheit durch frühzeitige Erkennung von Abweichungen des realen Zustandes des Verkehrs von dessen geplantem Zustand, z.B. daß ein Taxiway noch belegt ist, der bereits geräumt sein sollte.

Eine besondere Erhöhung der Sicherheit ergibt sich durch die Benutzung sowohl mindestens eines Primär- als auch mindestens eines Sekundärradars wobei das Primärradar der Ortung auf dem Flughafengelände und das Sekundärradar vorzugsweise im An- und Abflugbereich unter Transponderbenutzung zur Identifikation dient. Die Identifikation am Boden wird erfindungsgemäß durch übernahme der Identifikation vom Anflugradar (Sekundärradar) bei laufendem Verkehr bzw. vom Docking Guidance System beim startenden Verkehr und Beibehaltung der Identifiktion durch Tracing der Ziele des Primärradars durchgeführt. Zur weiteren Erhöhung der Sicherheit und Zuverlässigkeit werden erfindungsgemäß Squittern von Transpondern der Flug- und gegebenenfalls mit Transpondern ausgerüsteten Fahrzeuge am Boden detektiert und durch Multilateration der Signaleintreffzeitpunkte die exakte Position bei gleichzeitiger Identifikation ermittelt. So ist eine jederzeitige, redundante Identifizierung der Flugzeuge und gegebenenfalls auch sonstigen Fahrzeuge im Verkehrsbereich eines Flughafens möglich.

Es ist dabei vorgesehen, daß das erfindungsgemäße System eine Rollbewegung-Planungskomponente aufweist, mit der es möglich ist, den Lotsen Rollführungsrouten vorzuschlagen und diese auf Kollisionsfreiheit automatisch zu überprüfen. Die Planungskomponente und die Überprüfung der Kollisionsfreiheit erfolgt durcn eine fest installierte Software, der die entsprechenden Sicherheitsfeatures eingegeben sind. Durch diese wird auch die Einhaltung der Mindestabstände unter den verschiedenen Witterungsbedingungen besorgt. Diese Plannungssoftware enthällt auch Zwischenstopp-Positionen für die Flugzeuge, die eine kollisionsfreie Bewegung auch im Apron-Bereich garantieren. Grundlage der Planungen bilden vorteilhaft die Flugpläne. Auf Großflughäfen erfolgen die Start- und Landebewegungen ja nicht spontan, sondern werden flugplangerecht geplant, ebenso die Gatebelegung.

Es ist vorgesehen, daß in dem Flughafen-Bodenverkehrs-Leitsystem die notwendigen Anzeigen auf einem Monitor des Lotsen über ein an sich bekanntes Videosubsystem (Processing) erfolgt. Derartige Radarvideosubsysteme werden z.B. von einer Firma HITT zur Verfügung gestellt, ein Beispiel zeigt die Annonce aus der Zeitschrift "Jane's Airport Review, Sept. 1995, Volume 7, Issue 7, Seite 46". Ein derartiges System ist nicht Gegenstand der Erfindung.

In dem Radarvideo erfolgt eine Anzeige entsprechend den Angaben des BRITE II-Systems mit höherer Datenkonzentration und detaillierteren Angaben, als sich aus der Kombination des bekannten BRITE II-Systems und des bekannten Radarvideos der Firma HITT ergeben würden. Auch dies ist eine nicht unwesentliche Aufgabe der Erfindung.

Es ist vorteilhaft vorgesehen, daß die Anzeigen auf dem Monitor, z.B. das reale Radarvideo oder ein synthetisches Radarbild und/oder ein synthetisch gebildetes Abbild der Verkehrswege des Flughafens, mit Fenstern mit Statusanzeigen, Übergabezeilen und Quittierungszeilen etc. sowie mit den Schaltzuständen der Rollwegs-Befeuerungsabschnitte, der Stopbars etc. auf einem Monitor konzentrierbar sind. Diese Konzentration erfolgt in Abhängigkeit von dem jeweiligen Verkehrsaufkommen des Flughafens, so ist z.B. bei Nacht nur ein Controllerplatz zu besetzen, während am Morgen mit steigendem Verkehrsaufkommen weitere Controllerplätze gebildet werden. Entsprechend erfolgt dann eine Aufteilung der Verantwortung für die einzelnen Lotsen im Tower.

Die Übergabe der Verantwortung erfolgt vorteilhaft nach einer Übergabequittierung in Fensterdarstellung auf dem Monitor oder auf Hilfsmonitoren, damit eine sichere Arbeitsplatzverteilung erfolgen kann. Die Abläufe dabei entsprechen vorteilhaft den Abläufen, wie sie in den Systemen für eine streifenlose (strip less) Organisation eines Towers bekannt sind. Ein Beispiel zeigt die Druckschrift TECOS Terminal Coordination System, Ident. Nr. 02963.0 der Siemens AG von 1996.

Eine besonders vorteilhafte Durchführung der vorstehend geschilderten Abläufe ist möglich, wenn ein großer Flachbildschirm für die Darstellung der einzelnen Fenster, des Radarvideos etc. verwendet wird, insbesondere in Ausführung als Touchscreen. Bei einem derartigen Touchscreen kann sowohl eine Schaltung durch Berühren der jeweiligen Punkte, z.B. der Stopbars oder Taxiway-Abschnitte auf dem gebildeten synthetischen Video erfolgen als auch durch Anklicken mit einer Maus oder durch das Bedienen von Schaltpunkten auf dem Rand des Monitors. So ist eine vorteilhafte Konzentration aller Schaltpunkte, die bisher in gesonderten Pulten, sogenannten Keyboards erfolgte, im Sichtbereich des Controllers möglich. Entsprechend erhöht sich die Sicherheit der Bedienung mit der Möglichkeit der direkten Kontrolle und Bestätigung der durchgeführten Schaltvorgänge.

Zur notwendigen Datenkonzentration ist vorgesehen, daß zunächst alle Daten digitalisiert werden, also auch die analog vorliegenden Radardaten. Hierzu ist die plot-extraction vorteilhaft unter Zuhilfenahme der Datafusion und Einbeziehung der Sensorkorrelation besonders hilfreich. Alle Daten werden auf ein einheitliches Format gebracht, und dann dem Radarvideo oder einem vollständigen synthetischen Bild aufgegeben.

Zur Erhöhung der Planungssicherheit und zur Berücksichtigung von Notfällen ist vorgesehen, daß das System mit Daten der Flugzeugbewegungen im weiteren Luftraum, gegebenenfalls mit durch GPS, insbesondere durch Differential-GPS, ermittelten Anflug- und Abflugpositionen, Positionen auf dem Rollfeld und gegebenenfalls im Parkbereich versorgt wird. Die Verwendung von GPS erhöht in diesem Zusammenhang die Sicherheit, da so eine zusätzliche Positionsinformation zur Verfügung steht. Wegen der Unsicherheit der GPS-Funktion, insbesondere im Terminalbereich, ist diese Ausführung jedoch nur zur Erhöhung der Sicherheit, d.h. als Zusatzfunktion, vorgesehen. Die eigentliche Führung des Verkehrs erfolgt durch die sicheren Radardaten und weitere bodengestützte Sensoren sowie durch Sichtkontrolle der Lotsen. Diese Sensoren können auch optische Sensoren sein, z.B. für den Dockingbereich, hier in Form von Lasern oder Zeilenkameras. Weitere Ausgestaltungen der Systemkomponenten sind aus den Unteransprüchen 18 bis 21 zu ersehen.

In bezug auf das Dockingsystem ergibt sich eine vorteilhafte Erhöhung der Sicherheit, wenn die von dem Dockingsystem gelieferten Positionsdaten in die Datenfusion und Sensorkorrelation eingeführt werden und umgekehrt. Wenn dies unter Berücksichtigung der Parkpositionspläne erfolgt, diese also ebenfalls in die Bodenverkehrsplanungen mit einbezogen werden, erhöht sich die Sicherheit weiter.

Die Erfindung wird anhand von Zeichnungen näher erläutert, aus denen, ebenso wie aus den Unteransprüchen, weitere, auch erfindungswesentliche, Einzelheiten entnommen werden können. Im einzelnen zeigen.
- FIG 1: eine schematische Darstellung von SMGCS-Komponenten in einer Ausführung gemäß dem Stand der Technik,
- FIG 2: eine schematische Darstellung, die das Zusammenwirken der einzelnen SMGCS-Komponenten zeigt,
- FIG 3: die Wiedergabe eines realen Radarvideos,
- FIG 4: die Wiedergabe eines synthetischen Videos mit Fensterdarstellungen sowie
- FIG 5: eine Übersicht über die wesentlichen übermittelten Informationen.

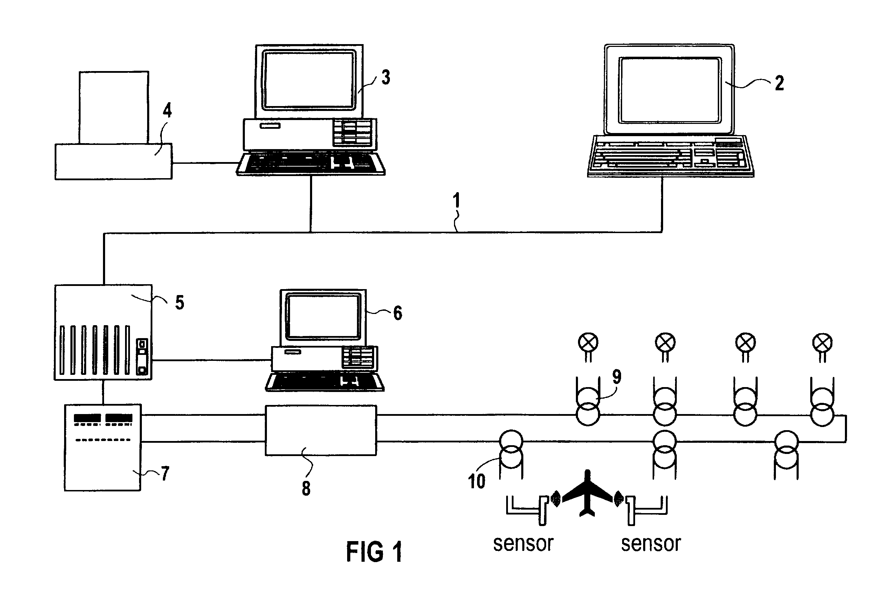

In FIG 1, die der bereits erwähnten Schrift AP.01.810e entnommen ist, bezeichnet 1 das Flughafen-LAN. 2 bezeichnet den Monitor eines Lotsenplatzes und 3 den Monitor sowie 4 den Drucker des Service-und Maintenancerechners. Der Monitor 2 ist entweder in herkömmlicher Monitortechnik oder als Flatpanel-Screen, insbesondere in Touchscreen-Ausführung, ausgebildet. 5 bezeichnet PLC's und 6 den BRITE-PC, der erfindungsgemäß in den ATC-Tower-Monitor integriert wird. FIG 1 bezeichnet ja den Stand der Technik. Die zur Bedienung des BRITE II-Systems notwendige Software befindet sich im BRITE-Master 8 und bewirkt in den BRITE-Einheiten 9 die gewünschten Schaltzustände. Die BRITE-Einheiten sind mit Sensoren 10 verbunden, die relativ beliebig ausgestaltet sein können. Wie dargestellt, befinden sich die BRITE-Einheiten in einem Serienkreis, um für alle Einheiten gleiche Helligkeit sicherzustellen. In dem gezeigten Stand der Technik ist eine datenmäßig Verbindung zu den Radarsystemen des Flughafens nicht vorgesehen.

Im Gegensatz dazu besitzt die erfindungsgemäße SMGCS-Ausführung eine integrierte Controller-Arbeitsposition, vorteilhaft auf X-Windows und offener Architektur basierend. Hier wird aus dem Rohvideo (Reales Darstellungsvideo) eine synthetische Darstellung zusammen mit Landkarten, Objektdaten, Konfliktmeldungen, Flugplandaten, Stopbar- und Befeuerungsdaten vorgenommen.

Im Rahmen der Integration ist eine Sensorik vorgesehen, die eine Kombination von verschiedenen Sensoren darstellt, in erster Linie verschiedenen Radarsystemen. Die Sensordaten werden fusioniert, um eine nahtlose Überwachung zu gewährleisten.

Die Datenverarbeitung erfolgt über ein Multisensor-Tracking und Labelling mit einer Korrelation der Sensordaten mit Flugplandaten, Befeuerungs- und Docking/Gatebelegungsdaten. Auf dieser Basis erfolgt dann die Steuerung des Flughafenverkehrs.

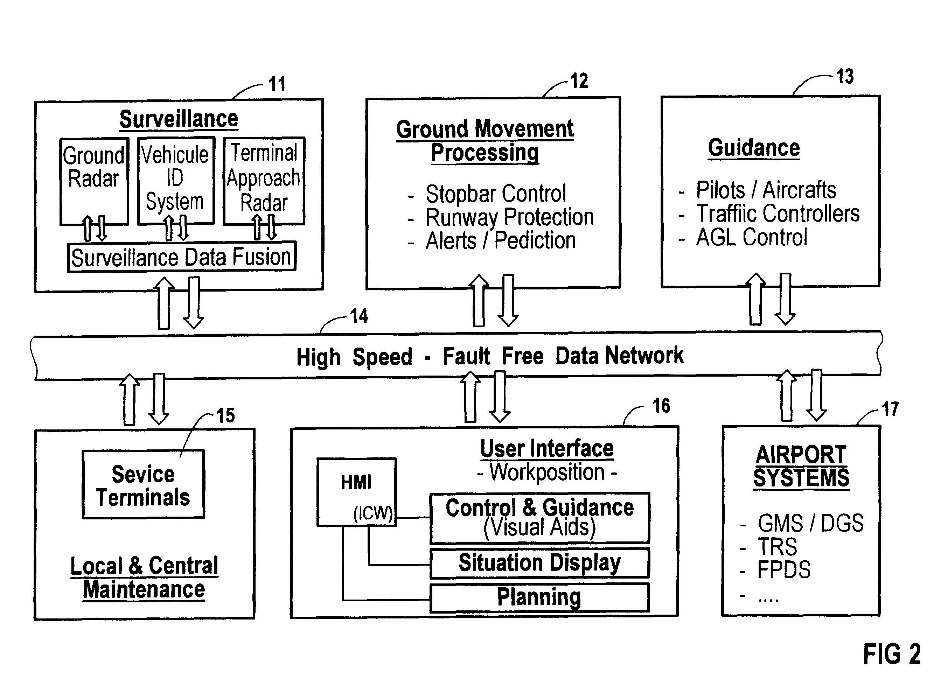

In FIG 2 bezeichnet 11 einen Block mit Sensordaten zur Überwachung, 12 bezeichnet die Vorgänge die zur Überwachung dienen, 13 stellt den Bezug für den Controller, den Piloten etc. dar. 14 bezeichnet ein Hochgeschwindigkeitsdatennetzwerk (Airport LAN), das als fehlerfreies, ausfallsicheres System ausgebildet ist. In dieses fließen auch noch die Informationen aus dem Block 15, d.h. von peripheren Diensten ein. Seitens des Flughafenpersonals erfolgen die Kontrollen, die im Block 16 dargestellt sind, ebenso die hierfür notwendigen Eingaben. Block 17 schließlich bezeichnet die wesentlichen Systemkomponenten, die verwendet werden.

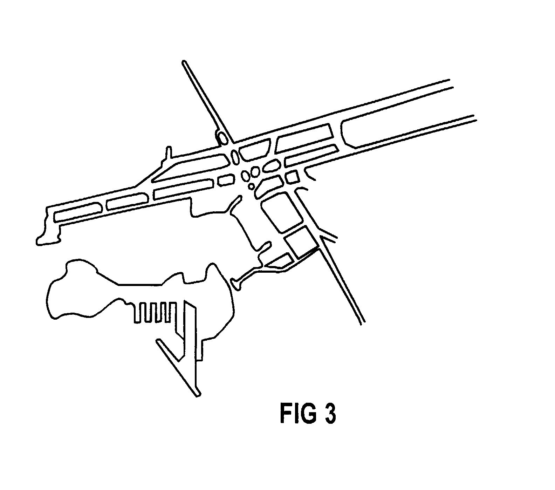

FIG 3, die selbst erklärend ist, zeigt ein reales Radarvideo. Dieses bildet die Basis der verwendeten Sensorik. Das Sensorsystem übermittelt Daten über die Position, gegebenenfalls auch der Geschwindigkeit der Richtung und der Identitätsnummer aller Flugzeuge und Fahrzeuge. Weiterhin gibt es auch Informationen über stationäre Objekte und ihre relative Lage zu den angezeigten Positionen von Flugzeugen und Fahrzeugen. Das Radarvideo wird ergänzt durch die Angaben von stationären Sensoren, insbesondere wichtig für Gebiete mit Radarabschattung. Die Kombination aller vorgenannten Sensoren ergibt eine komplette Information über den Flughafenverkehr.

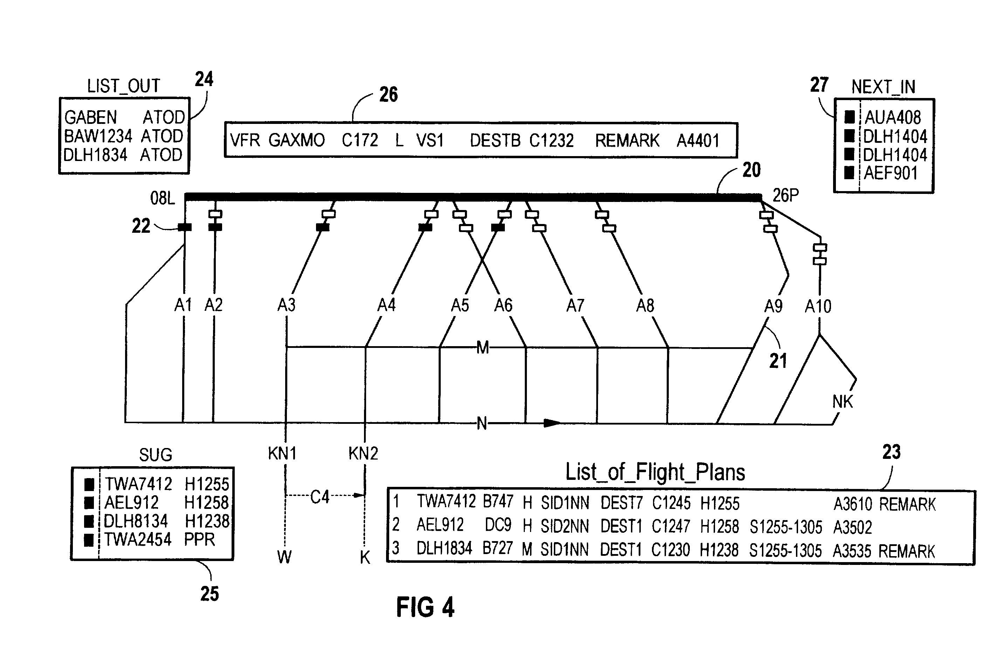

In FIG 4 bezeichnet 20 z.B. eine Runway und 21 Taxiways. Auf den Taxiways befinden sich Stopbars o.ä. 22 sowie weitere, aus Gründen der Vereinfachung nicht näher gezeigte Befeuerungs- und Hinweiseinrichtungen. FIG 4 zeigt ein ausgeführtes synthetisches Video, d.h. insofern auch den Stand der Technik. Das neue synthetische Video ist erfindungsgemäß detaillierter ausgebildet. 23 bezeichnet eine Fensterdarstellung des Flugplans, 24, 25 und 26 sowie 27 bezeichnen weitere Flugplan- und Zuordnungsfenster. Es versteht sich, daß auf einem großen Flachbildschirm diese und weitere Angaben in ausreichender Größe und in übersichtlicher Anordnung dargestellt werden können. Ein Flachbildschirm empfiehlt sich, um z.B. eine niedrige Gebrauchshöhe zu erreichen und den Einbau anderer Systeme zu ermöglichen bzw. Platz für andere Systeme zu schaffen.

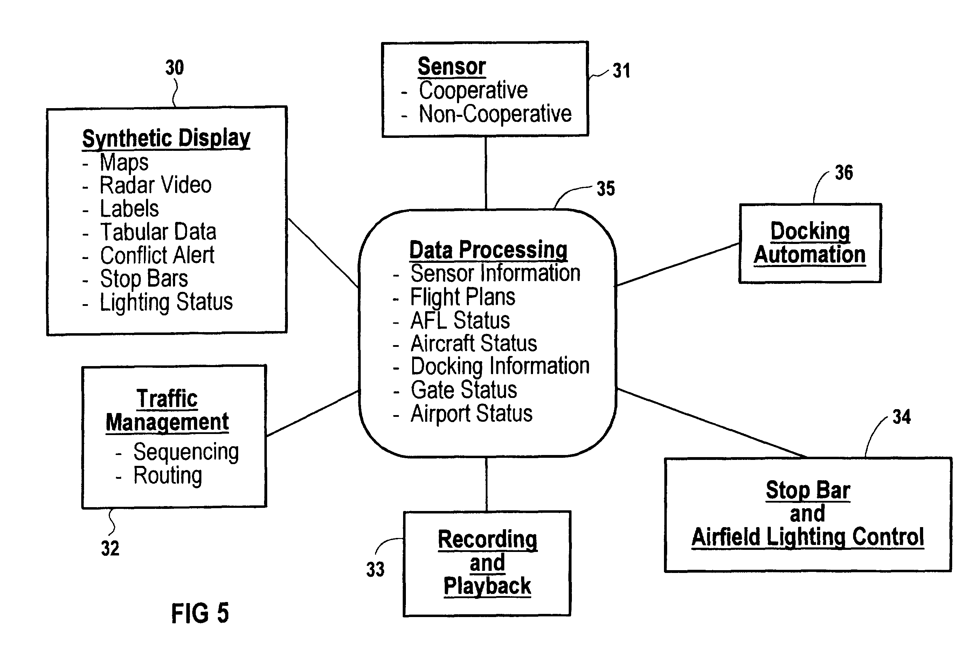

In FIG 5 sind in 30 die wesentlichen Einzelheiten aufgeführt, die das synthetische Video enthält. 31 zeigt die beiden Arten von Sensoren, die auf unterschiedlichster Basis arbeiten können. Am wichtigsten sind die kooperativ arbeitenden Sensoren, die gleichzeitig die Flugzeugidentifikation verifizieren. 32 zeigt die Grundzüge des Verkehrslenkungssystems, 33 die Hilfsfunktionen, die insbesondere bei besonderen Vorfällen wichtig werden. In 34 ist die Komponente angegeben, mit der die aktuelle Führung der Flugzeuge auf der Runway und den Taxiways sowie im Vorfeldbereich erfolgt und in 36 die Dockingautomatisierung, die mit den verschiedensten Sensoren, (Laser, Zeilenkameras, Mikrowellenempfänger, D-GPS etc.) erfolgen kann. In 35 ist schließlich die Integration der unterschiedlichsten Daten, die in dem System zusammenfließen, angedeutet.

Es versteht sich, daß von dem erfindungsgemäßen System auch Gebrauch gemacht wird, wenn nicht alle der hier beschriebenen einzelnen Komponenten im System integriert sind, sondern als Stand-alone-Systeme betrieben werden, oder wenn auf einzelne Komponenten, etwa automatische Dockingsysteme, z.B. auf kleineren Flughäfen mit nur wenigen Parkpositionen, ganz verzichtet wird. Die Basis der integrierten Behandlung der wesentlichen Daten, die über die Positionen und Bewegungen der Flugzeuge und gegebenenfalls Fahrzeuge, Auskunft geben, auf einen Arbeitsplatz, mit der Möglichkeit zum Splitten der Controlling-Aufgaben, bleibt als erfindungsgemäße Lösung bestehen.

## Patentansprüche

1. Flughafen-Bodenverkehrs-Leitsystem (Surface Movement Guidance and Control System, SMGCS) mit Radarerfassung, integrierter Verarbeitung und integrierter bildlicher Darstellung in Form eines Radarvideos auf zumindest einem Monitor für die relevanten, insbesondere der sicherheitsrelevanten, Positionen und Bewegungen von Flugzeugen, und gegebenenfalls Fahrzeugen, auf dem gesamten relevanten Flughafengelände (Runway, Taxiways, Apron) und im relevanten Flughafenluftraum (CTR) zur operationellen Leitung des Flughafenverkehrs, wobei die operationelle Leitung von der Erfassung der Flugzeuge durch zumindest ein Radar, zwischen Flugbewegung und Stillstand in Parkposition, im wesentlichen anhand der detaillierten Radar-video-Monitordarstellung erfolgt, wobei die relevanten Daten unter Datenkonzentration auf dem Monitor zumindest eines Flughafentowerlotsen einschließlich der Bodenverkehrssignalzustände in Bildform und Schriftzeichen- bzw. Zahlenform derart dargestellt sind, daß der Lotse die, die Flugzeuge bzw. Fahrzeuge leitenden Bodenverkehrssignale, z.B. für Stoppbars, Dockinganweisungs-Schilder etc. sicherheitsbezogen Signalgebern eingeben kann.

2. Flughafen-Bodenverkehrs-Leitsystem nach Anspruch 1, **dadurch gekennzeichnet**, daß in die Erfassung und operationelle Leitung Fahrzeugbewegungen auf dem Flughafengelände einbezogen sind, z.B. mit Hilfe von Transponderabfragen oder Squittern von Transpondern, über ID-Tags und drahtlose Kommunikationsmittel, die auch zur Übertragung von Anweisungen genutzt werden kann.

3. Flughafen-Bodenverkehrs-Leitsystem nach Anspruch 1 oder 2, **dadurch gekennzeichnet**, daß in die Erfassung und operationelle Leitung die Flugbewegungen im Anflug- und Abflugbereich einbezogen sind.

4. Flughafen-Bodenverkehrs-Leitsystem nach Anspruch 1, 2 oder 3, **dadurch gekennzeichnet**, daß es ein Primär- und/oder Sekundärradar aufweist, wobei das Primärradar der Ortung auf dem Flughafengelände und das Sekundärradar vorzugsweise im An- und Abflugbereich unter Transponderbenutzung zur Identifikation, dient.

5. Flughafen-Bodenverkehrs-Leitsystem nach einem oder mehreren der vorhergehenden Ansprüche, **dadurch gekennzeichnet**, daß es ein Multilaterationssystem (z.B. CAPTS) aufweist, das durch Multilateration der Signaleintreffzeitpunkte die exakte Position bei gleichzeitiger Identifikation unter Ausnutzung von Transponder-Squittern ermittelt.

6. Flughafen-Bodenverkehrs-Leitsystem nach Anspruch 4 oder 5, **dadurch gekennzeichnet**, daß bei Erfassung durch das Primärradar die Identifikation des erfassten Flugzeuges mit Hilfe von Datenquellen erfolgt und unter Beibehaltung im System dargestellt wird.

7. Flughafen-Bodenverkehrs-Leitsystem nach einem oder mehreren der vorhergehenden Ansprüche, **dadurch gekennzeichnet**, daß es eine Rollbewegungs-Planungskomponente aufweist, mit der unter Einbeziehung der jeweiligen Landerichtung ein kollisionsfreier Rollverkehr und sonstiger Bodenverkehr unter Einbeziehung der notwendigen Sicherheitsabstände in Abhängigkeit von der Wetterkategorie (CATI-III) geplant wird.

8. Flughafen-Bodenverkehrs-Leitsystem nach Anspruch 7, **dadurch gekennzeichnet**, daß der Monitor auch Fenster mit Statusanzeigen, Übergabeanzeigen, insbesondere in Zeilenform und Quittierungszeilen etc. anzeigend ausgebildet ist.

9. Flughafen-Bodenverkehrs-Leitsystem nach Anspruch 7 oder 11, **dadurch gekennzeichnet**, daß in ihm die Rollwegsbefeuerungsabschnitte, die Stopbars und alle weiteren, zur Führung des Bodenverkehrs notwendigen, Signaleinrichtungen und ihr Schaltzustand, insbesondere verknüpft mit weiteren sicherheitsrelevanten Informationen, darstellbar sind.

10. Flughafen-Bodenverkehrs-Leitsystem nach einem oder mehreren der vorhergehenden Ansprüche, **dadurch gekennzeichnet**, daß die im System erfaßten Daten entsprechend des jeweiligen Verkehrsaufkommens des Flughafens auf einen oder auf mehreren Controllerplätze aufteilbar und entsprechend der jeweiligen Verantwortung bearbeitbar sind.

11. Flughafen-Bodenverkehrs-Leitsystem nach Anspruch 9 oder 10, **dadurch gekennzeichnet**, daß die Übergabe der Verantwortung nach einer Übergabequittierung in Fensterdarstellungen auf dem Monitor oder auf Hilfsmonitoren erfolgt.

12. Flughafen-Bodenverkehrs-Leitsystem nach Anspruch 8, 9, 10 oder 11, **dadurch gekennzeichnet**, daß die Übernahme der Verantwortung aus dem Anflugbereich in den Runwaykontrollbereich über den Taxiwaykontrollbereich in den Vorfeldkontrollbereich und in umgekehrter Reihenfolge für den Abflug durch Umgruppierung von elektronischen Flugstreifen (strip less) und Kennzeichnung der jeweiligen Verantwortung in Monitorfenstern erfolgt, gegebenenfalls in Verbindung mit dem Radarvideo oder eiener synthetischen Darstellung.

13. Flughafen-Bodenverkehrs-Leitsystem nach einem oder mehreren der vorhergehenden Ansprüche, **dadurch gekennzeichnet**, daß die Radardaten, insbesondere mit plot-extraction, zusammen mit dem Status der Rollführungs-, Lande- und Startbahnlichter sowie weiteren Sensorkomponenten (aber auch von Transpondern) gegebenenfalls mit Hilfe von Datafusion und Sensor-Korrelation zu einem einheitlichen Format verarbeitet, insbesondere vollständig digitalisiert und dann dem Radarvideo aufgegeben oder zu einem vollständigen, synthetischen Bild zusammengesetzt und/oder anderen Monitordarstellungen aufgegeben werden.

14. Flughafen-Bodenverkehrs-Leitsystem nach einem der Ansprüche 8, 9, 10, 11, 12 oder 13, **dadurch gekennzeichnet**, daß das Radarvideo, gegebenenfalls Fenster mit Statusanzeigen, Übergabezeilen und Quittierungszeilen etc. auf einem Flachbildschirm mit einer Bildschirmdiagonalen von über 19 Zoll (flat-panel) dargestellt sind, der insbesondere als Touchscreen mit Schaltelementen für die Flughafenbefeuerung, für die Voicecommunication etc. ausgebildet ist.

15. Flughafen-Bodenverkehrs-Leitsystem nach nach einem oder mehreren der vorhergehenden Ansprüche, **dadurch gekennzeichnet**, daß es mit Daten der Flugzeugbewegungen im weiteren Luftraum, gegebenenfalls mit durch GPS, insbesondere Differential GPS, ermittelten Anflug- und Abflugpositionen, Positionen auf dem Rollfeld und gegebenenfalls im Parkbereich versorgt wird.

16. Flughafen-Bodenverkehrs-Leitsystem nach einem oder mehreren der vorhergehenden Ansprüche, **dadurch gekennzeichnet**, daß es einen Maintenance-Rechner mit Monitor aufweist, in dem die notwendigen Erhaltungs- und Reparaturarbeiten sowie gegebenenfalls Lampenausfälle anzeigbar sind.

17. Flugnafen-Bodenverkehrs-Leitsystem nach einem oder mehreren der vorhergehenden Ansprüche, **dadurch gekennzeichnet**, daß die Lampen der Flughafenbefeuerung einzeln addressierbar ausgebildet und dafür mit EPROMs, insbesondere EEPROMs/Flash PROMs, ausgerüstet sind.

18. Flughafen-Bodenverkehrs-Leitsystem nach einem oder mehreren der vorhergehenden Ansprüche, **dadurch gekennzeichnet**, daß es ein Flughafen-Datenübertragungssystem aufweist, das mit Glasfaserübertragungstechnik, Coaxialkabeln und/oder Twisted Pair-Kabeln insbesondere in redundanter Ausführung, arbeitet.

19. Flughafen-Bodenverkehrs-Leitsystem nach einem oder mehreren der vorhergehenden Ansprüche, **dadurch gekennzeichnet**, daß es ein automatisches Dockingsystem aufweist, das insbesondere mit optischer Erfassung, etwa über Zeilenkameras oder Laserradar, zur Ermittlung der Flugzeugposition arbeitet, gegebenenfalls unter Zuhilfenahme eines Transponderidentifikationssystems für die optisch erfassten Flugzeuge.

20. Flughafen-Bodenverkehrs-Leitsystem nach Anspruch 12, 13, 14, 15, 16, 18 oder 19, **dadurch gekennzeichnet**, daß die von dem Dockingsystem gelieferten Positionsdaten in die Datenfusion und Sensorkorrelation eingeführt werden und umgekehrt.

21. Flughafen-Bodenverkehrs-Leitsystem Anspruch 18 oder 19, **dadurch gekennzeichnet**, daß die Auswahl-, Belegungs- sowie Statusmeldungen von Parkpositionen flugplanbezogen erfolgen und auf den Monitoren angezeigt werden.

## Claims

1. Airport surface movement guidance and control system (SMGCS) with radar detection, integrated processing and integrated graphical display in the form of a radar video on at least one monitor for the relevant, in particular the safety-relevant positions and movements of aircraft, and, possibly, vehicles, on all relevant airside areas (runway, taxiways, apron) and in the relevant airport airspace (CTR) for the operational management of airport traffic, the operational management being carried out by using at least one radar to detect the aircraft, to discriminate between air movement and stationary, parked aircraft, essentially using the detailed radar video monitor display, the relevant data being displayed after data concentration, on the monitor of at least one controller, including the ground traffic signal states in video form and character or numeric form, in such a way that the controller can input the ground traffic signals which manage the aircraft and vehicles, for example for stop bars, docking instruction notices etc., to signal transmitters in a safety-related manner.

2. Airport surface movement guidance and control system according to Claim 1, characterized in that the detection and operational management include vehicle movements on airside, for example with the aid of transponder interrogations or squitters by transponders, via ID tags and wire-free communications means, which can also be used for transmitting instructions.

3. Airport surface movement guidance and control system according to Claim 1 or 2, characterized in that the airborne movements in the approach and departure area are included in the detection and operational management.

4. Airport surface movement guidance and control system according to Claim 1, 2 or 3, characterized in that said system has a primary and/or secondary radar, the primary radar being used for location on airside, and the secondary radar preferably being used for identification in the approach and departure area, using transponders.

5. Airport surface movement guidance and control system according to one or more of the preceding claims, characterized in that said system has a multilateration system (e.g. CAPTS) which uses multilateration of the signal arrival times to determine exact position with simultaneous identification using transponder squitters.

6. Airport surface movement guidance and control system according to Claim 4 or 5, characterized in that, on detection by the primary radar, the identification of the detected aircraft is carried out with the aid of data sources, and is displayed while being retained in the system.

7. Airport surface movement guidance and control system according to one or more of the preceding claims, characterized in that said system has a taxiing movement planning component, by means of which, taking account of the respective landing direction, collision-free taxiing traffic and other surface movement is planned, taking account of the necessary safety separations, as a function of the weather category (CATI-III).

8. Airport surface movement guidance and control system according to Claim 7, characterized in that the monitor is also designed to display windows with status displays, handover displays, particularly in line form and acknowledgement lines, etc.

9. Airport surface movement guidance and control system according to Claim 7, characterized in that the taxiway lighting sections, the stop bars and all the other signalling devices which are necessary to control surface movement, and their switching state can be displayed, in particular linked to other safety-relevant information, in said system.

10. Airport surface movement guidance and control system according to one or more of the preceding claims, characterized in that the data which are detected in the system can be split between one or more controller locations and can be processed on the basis of the respective responsibility, depending on the respective amount of traffic at the airport.

11. Airport surface movement guidance and control system according to Claim 9 or 10, characterized in that the handover of responsibility takes place after a handover acknowledgement in window displays on the monitor or on auxiliary monitors.

12. Airport surface movement guidance and control system according to Claim 8, 9, 10 or 11, characterized in that the handover of responsibility takes place from the approach area to the runway control area via the taxiway control area to the apron control area and, in the reverse sequence for departure, by regrouping electronic flight strips (stripless) and designating the respective responsibility in monitor windows, possibly in conjunction with the radar video or a synthetic display.

13. Airport surface movement guidance and control system according to one or more of the preceding claims, characterized in that the radar data, in particular with plot-extraction, are processed, together with the status of the taxiway, landing and take-off runway lights as well as other sensor components (or else transponders), possibly with the aid of data fusion and sensor correlation, to produce a standard format, in particular being completely digitized, and are then output to the radar video or are composed to form a complete synthetic display and/or are output to other monitor displays.

14. Airport surface movement guidance and control system according to one of Claims 8, 9, 10, 11, 12 or 13, characterized in that the radar video, possibly windows with status displays, handover lines and acknowledgement lines etc., are displayed on a flat screen having a screen diagonal of more than 19 inches (flat panel) which is designed, in particular, as a touchscreen with switching elements for airport lighting, for voice communication etc.

15. Airport surface movement guidance and control system according to one or more of the preceding claims, characterized in that said system is supplied with data relating to aircraft movements in the airspace further away, possibly with approach and departure positions, positions on the taxiway and, possibly, in the parking area being determined by GPS, in particular differential GPS.

16. Airport surface movement guidance and control system according to one or more of the preceding claims, characterized in that said system has a maintenance computer with a monitor on which the necessary maintenance and repair tasks, possibly as well as light failures, can be displayed.

17. Airport surface movement guidance and control system according to one or more of the preceding claims, characterized in that the lights of the airport lighting system are designed such that they can be addressed individually, and, for this purpose, are equipped with EPROMs, in particular EEPROMs/flash PROMs.

18. Airport surface movement guidance and control system according to one or more of the preceding claims, characterized in that said system has an airport data transmission system which operates using glass-fibre transmission technology, coaxial cables and/or twisted pair cables, in particular of a redundant design.

19. Airport surface movement guidance and control system according to one or more of the preceding claims, characterized in that said system has an automatic docking system which operates in particular with optical detection, for example via raster cameras or laser ranging and detection, for determining the aircraft position, possibly with the assistance of a transponder identification system for the optically detected aircraft.

20. Airport surface movement guidance and control system according to Claim 12, 13, 14, 15, 16, 18 or 19, characterized in that the position data supplied from the docking system are introduced into the data fusion and sensor correlation, and vice versa.

21. Airport surface movement guidance and control system according to Claim 18 or 19, characterized in that the selection, occupancy and status messages for parking positions are produced on the basis of flight plans, and are displayed on the monitors.

## Revendications

1. Système de guidage de trafic au sol d'aéroport (Surface Movement Guidance and Control System, SMGCS) avec détection radar, avec traitement intégré et avec représentation imagée intégrée sous la forme d'une vidéo radar sur au moins un moniteur pour les positions et mouvements déterminants, déterminants notamment pour la sécurité, d'avions et éventuellement de véhicules, sur l'ensemble du terrain déterminant de l'aéroport (runway, taxiways, aire de stationnement) et dans l'espace aérien déterminant de l'aéroport (CTR) en vue du guidage opérationnel du trafic de l'aéroport, dans lequel le guidage opérationnel est effectué avec une détection des avions au moyen d'au moins un radar, entre le vol et l'immobilisation sur l'emplacement de stationnement, essentiellement à l'aide d'une représentation détaillée sur moniteur de vidéo radar, et dans lequel les données déterminantes sont représentées avec une concentration de données sur le moniteur d'au moins un contrôleur de tour de contrôle d'aéroport en incluant des états de signaux de trafic au sol sous forme d'images et sous forme de caractères ou de nombres de telle sorte que le contrôleur de la tour de contrôle peut envoyer les signaux de trafic au sol guidant les avions ou les véhicules, par exemple pour des stops, pour des panneaux d'instructions de docking, etc., à des transmetteurs de signaux se rapportant à la sécurité.

2. Système de guidage de trafic au sol d'aéroport selon la revendication 1, caractérisé par le fait que des mouvements de véhicules sur le terrain de l'aéroport sont inclus dans la détection et le guidage opérationnel, par exemple à l'aide d'interrogations de transpondeurs ou d'émissions du type squitter par des transpondeurs, par l'intermédiaire de marques d'identification ID-Tags et de moyens de communication sans fil qui peuvent aussi être utilisés pour la transmission d'instructions.

3. Système de guidage de trafic au sol d'aéroport selon la revendication 1 ou 2, caractérisé par le fait que les mouvements de vol dans la zone d'approche et d'envol sont inclus dans la détection et le guidage opérationnel.

4. Système de guidage de trafic au sol d'aéroport selon la revendication 1, 2 ou 3, caractérisé par le fait qu'il comporte un radar primaire et/ou un radar secondaire, le radar primaire servant à la localisation sur le terrain de l'aéroport et le radar secondaire servant de préférence à l'identification dans la zone d'envol et d'approche avec l'utilisation de transpondeurs.

5. Système de guidage de trafic au sol d'aéroport selon une ou plusieurs des revendications précédentes, caractérisé par le fait qu'il comporte un système d'analyse multilatérale (par exemple CAPTS) qui détermine par une analyse multilatérale des instants d'arrivée des signaux la position exacte avec une identification simultanée en exploitant des émissions du type squitter de transpondeurs.

6. Système de guidage de trafic au sol d'aéroport selon la revendication 4 ou 5, caractérisé par le fait que, lors de la détection par le radar primaire, l'identification de l'avion détecté s'effectue à l'aide de sources de données et est représentée tout en étant gardée dans le système.

7. Système de guidage de trafic au sol d'aéroport selon une ou plusieurs des revendications précédentes, caractérisé par le fait qu'il comporte un élément de planification des mouvements sur les pistes avec lequel, en incluant la direction respective d'atterrissage, la circulation sur les pistes et toute autre circulation au sol sont planifiées sans collision en incluant les distances de sécurité nécessaires en fonction de la catégorie des conditions météorologiques (CATI-III).

8. Système de guidage de trafic au sol d'aéroport selon la revendication 7, caractérisé par le fait que le moniteur est conçu de manière à afficher aussi des fenêtres avec des indications d'état, des indications de transfert, notamment sous forme de lignes et de lignes d'accusé de réception, etc..

9. Système de guidage de trafic au sol d'aéroport selon la revendication 7, caractérisé par le fait que les tronçons d'éclairage de pistes, les stops et tous les autres dispositifs de signalisation nécessaires au guidage du trafic au sol ainsi que leur état de commutation, combinés notamment à d'autres informations déterminantes pour la sécurité, peuvent être représentés dans ce système.

10. Système de guidage de trafic au sol d'aéroport selon une ou plusieurs des revendications précédentes, caractérisé par le fait que les données détectées dans le système peuvent être réparties selon la densité respective du trafic de l'aéroport sur un ou plusieurs postes de contrôle et peuvent être traitées selon la responsabilité respective.

11. Système de guidage de trafic au sol d'aéroport selon la revendication 9 ou 10, caractérisé par le fait que le transfert de la responsabilité s'effectue après un accusé de réception de transfert dans des représentations en fenêtres sur le moniteur ou sur des moniteurs auxiliaires.

12. Système de guidage de trafic au sol d'aéroport selon la revendication 8, 9, 10 ou 11, caractérisé par le fait que la prise en charge de la responsabilité s'effectue de la zone d'approche dans la zone de contrôle de runway via la zone de contrôle de taxiway dans la zone de contrôle d'aire de trafic et dans l'ordre inverse pour l'envol, au moyen d'un regroupement de bandes aériennes électroniques (strip less) et d'une caractérisation de la responsabilité respective dans des fenêtres de moniteur, le cas échéant en liaison avec la vidéo radar ou avec une représentation synthétique.

13. Système de guidage de trafic au sol d'aéroport selon une ou plusieurs des revendications précédentes, caractérisé par le fait que les données radars sont traitées, notamment avec une plot-extraction, conjointement à l'état de balises de guidage de pistes d'atterrissage et d'envol ainsi que d'autres éléments capteurs (également de transpondeurs), le cas échéant à l'aide d'une fusion de données et d'une corrélation de capteurs, en un format unique, sont notamment complètement numérisées et sont ensuite délivrées à la vidéo radar ou sont rassemblées en une image synthétique complète et/ou sont délivrées à d'autres représentations sur moniteurs.

14. Système de guidage de trafic au sol d'aéroport selon l'une des revendications 8, 9, 10, 11, 12 ou 13, caractérisé par le fait que la vidéo radar, éventuellement des fenêtres avec des indications d'états, des lignes de transfert et des lignes d'accusé de réception, etc., sont représentées sur un écran plat qui a une diagonale d'écran supérieure à 19 pouces (flat-panel) et qui est conçu notamment comme un Touchscreen avec des éléments de commutation pour l'éclairage d'aéroport, pour la communication vocale, etc..

15. Système de guidage de trafic au sol d'aéroport selon une ou plusieurs des revendications précédentes, caractérisé par le fait qu'il reçoit des données des mouvements d'avions dans un espace aérien plus large, éventuellement avec des positions d'approche et d'envol déterminées par GPS, notamment par GPS différentiel, sur les pistes et éventuellement sur la zone de stationnement.

16. Système de guidage de trafic au sol d'aéroport selon une ou plusieurs des revendications précédentes, caractérisé par le fait qu'il comporte un ordinateur de maintenance avec moniteur dans lequel les travaux de maintenance et de réparation nécessaires ainsi que le cas échéant des pannes de lampes peuvent être affichés.

17. Système de guidage de trafic au sol d'aéroport selon une ou plusieurs des revendications précédentes, caractérisé par le fait que les lampes de l'éclairage d'aéroport sont conçues de manière à pouvoir être adressées individuellement et sont équipées à cet effet d'EPROM, notamment d'EEPROM ou de Flash PROM.

18. Système de guidage de trafic au sol d'aéroport selon une ou plusieurs des revendications précédentes, caractérisé par le fait qu'il comporte un système de transmission de données d'aéroport qui fonctionne avec une technique de transmission par fibres optiques, par câbles coaxiaux et/ou par paires torsadées, en particulier en une mise en oeuvre redondante.

19. Système de guidage de trafic au sol d'aéroport selon une ou plusieurs des revendications précédentes, caractérisé par le fait qu'il comporte un système de docking automatique qui fonctionne notamment avec une détection optique, par exemple avec des caméras en lignes ou avec des radars lasers, en vue de la détermination de la position d'avion, le cas échéant à l'aide d'un système d'identification de transpondeur pour les avions détectés par des moyens optiques.

20. Système de guidage de trafic au sol d'aéroport selon la revendication 12, 13, 14, 15, 16, 18 ou 19, caractérisé par le fait que les données de position fournies par le système de docking sont introduites dans la fusion de données et dans la corrélation de capteurs et inversement.

21. Système de guidage de trafic au sol d'aéroport selon la revendication 18 ou 19, caractérisé par le fait que les signalisations de sélection, d'occupation et d'état de positions de stationnement s'effectuent par rapport à un plan de vols et sont affichées sur les moniteurs.
